Europäisches Patentamt

European Patent Office

Office européen des brevets

(11) Veröffentlichungsnummer: **0 237 724**
**A2**

## (12) EUROPÄISCHE PATENTANMELDUNG

(21) Anmeldenummer: 87100829.8

(22) Anmeldetag: 22.01.87

(51) Int. Cl.4: **F17D 1/17** ,
//B01F17/00,C10L1/32

(30) Priorität: 21.03.86 DE 3609641

(43) Veröffentlichungstag der Anmeldung:
23.09.87 Patentblatt 87/39

(84) Benannte Vertragsstaaten:
**DE FR IT NL**

(71) Anmelder: **HÜLS AKTIENGESELLSCHAFT**
**- RSP Patente / PB 15 - Postfach 13 20**
**D-4370 Marl 1(DE)**

(72) Erfinder: **Balzer, Dieter, Dr.**
**Talstrasse 21**
**D-4358 Haltern(DE)**

(54) **Verfahren zum Transport von zähflüssigen Ölen.**

(57) Gegenstand der Erfindung ist ein Verfahren zum Transport von Schweröl, wobei eine emulgatorhaltige Öl-in-Wasser-Emulsion mit mindestens 10 bis 15 % Wasser transportiert und anschließend wieder in Rohöl und Wasser getrennt wird. Als Emulgator wird eine Mischung aus carboxymethyliertem Oxalkylat der Formel

$$R\text{-}(OCH_2CH_2)_nOCH_2COOM$$

und Ethersulfat der Formel

$$R'\text{-}(OCH_2\text{-}CH_2)_m\text{-}SO_3M'$$

in denen R und auch R' einen gesättigten oder ungesättigten linearen oder verzweigten aliphatischen Rest mit 8 bis 20 Kohlenstoffatomen, einen alkylaromatischen Rest mit 4 bis 16 Kohlenstoffatomen oder einen di-oder trialkylaromatischen Rest mit zusammen 5 bis 20 bzw. 7 bis 24 Kohlenstoffatomen in den Alkylgruppen, m 1 bis 40, n 1 bis 40 und M und M' ein Alkali-oder Erdalkali-Metallion oder Ammonium bedeuten, einsetzt.

EP 0 237 724 A2

## Verfahren zum Transport von zähflüssigen Ölen

Schweröle und Schwerstöle lassen sich unter Bedingungen üblicher Außentemperaturen infolge ihrer sehr hohen Viskosität nur schwierig in Rohrleitungen transportieren. Zur Erhöhung ihrer Mobilität werden sie daher vielfach mit niedrigviskosen Rohölen oder Raffinerieschnitten vermischt; eine solche Arbeitsweise erfordert relativ hohe Zusätze, um eine merkliche Fließverbesserung zu erreichen. Außerdem ist ein solches Verfahren nur dort sinnvoll, wo Leichtölfelder am gleichen Ort existieren oder eine nahegelegene Raffinerie niedrigviskose Benzinfraktionen zu liefern vermag.

Eine andere ebenfalls angewandte Methode besteht darin, dem Schweröl Wärme zuzuführen, um seine Viskosität abzusenken und entsprechend sein Fließvermögen zu verbessern, wozu beträchtliche Wärmemengen aufgewendet werden müssen. So ist es z. B. notwendig, ein Schweröl von 10.3° API, dessen Viskosität bei 20 °C 40 000 mPa s beträgt, auf eine Temperatur von ca. 95 °C zu erhitzen, um eine Viskosität von ca. 100 mPa s zu erreichen, einen für den Öltransport in Rohrleitungen häufig geforderten Schwellenwert (M. L. Chirinos et al., Rev. Tec. Intevep 3 (2), 103 (1983). Dies bedeutet einen extremen Kostenaufwand für die Ausstattung und die Versorgung der Rohrleitungen und einen Verlust von 15 bis 20 % an Rohöl, da üblicherweise die notwendige Wärmemenge durch Verbrennen von Rohöl gewonnen wird.

Ein weiteres Verfahren des Schweröltransportes besteht darin, daß man das Öl in Form einer mehr oder minder leicht flüssigen Emulsion durch die Rohrleitungen pumpt. Da die Viskosität von Emulsionen ganz überwiegend von der des Dispersionsmittels bestimmt wird, handelt es sich hier um eine Öl-in-Wasser-Emulsion. Die Öl-in-Wasser-Emulsion wird erhalten, indem man dem Öl unter Anwendung von Scherkräften Wasser und Emulgator zusetzt und diese Mischung sodann in die Rohrleitung pumpt. In einem Absetztank, z. B. vor dem Eintritt in die Raffinerie, wird die Emulsion wieder in Öl und Wasser getrennt und das abgetrennte Öl der Raffinerie zugeführt. Der Emulgator soll in möglichst geringer Konzentration zu einer stabilen, leicht flüssigen Öl-in-Wasser-Emulsion mit sehr hohem Ölanteil führen, was naturgemäß hohe Anforderungen an die einzusetzenden Emulgatoren stellt. Hohe Scherkräfte sind bei der Emulgierung ebenfalls zu vermeiden, da die Gefahr einer Inversion zu einer bei Schwerölen extrem hochviskosen Wasser-in-Öl-Emulsion besteht. Die Emulsionen sollen außerdem stabil sein sowohl gegenüber höheren Salinitäten, wie sie bei vielen Lagerstättensystemen auftreten, als auch gegenüber höheren Temperaturen. Trotz ausreichender Stabilität der Emulsionen beim Fluß durch die Rohrleitung sollen sie sich möglichst unproblematisch wieder trennen lassen.

Die bisher vorgeschlagenen Emulgatoren erfüllen die genannten Bedingungen noch nicht hinreichend. In vielen Fällen (z. B. US-Patentschriften 4 285 356, 4 265 264 und 4 249 554) werden Emulsionen mit Ölgehalten von nur 50 % genannt, was bedeutet, daß für den Öltransport auf die Hälfte des Rohrleitungsvolumens verzichtet werden muß. In anderen Fällen (z. B. CA-Patentschriften 1 108 205, 1 113 529, 1 117 568 sowie US-Patentschrift 4 246 919) ist die mit dem Emulgatorzusatz erreichte Viskositätserniedrigung trotz des relativ geringen Ölanteils nicht sonderlich stark.

Es bestand daher die Aufgabe, für die Emulgierung von Schweröl in Wasser bei der Ölförderung in Produktionsleitungen und/oder zum Öltransport in Transportrohrleitungen Emulgatoren mit hoher von der Salinität weitgehend unabhängiger Wirksamkeit zu finden.

Diese Aufgabe wurde gelöst durch ein Verfahren zum Transport von zähflüssigen Ölen durch eine Rohrleitung in Form einer Öl-in-Wasser-Emulsion, wie es durch die Patentansprüche charakterisiert wird.

Die carboxymethylierten Oxethylate sind Verbindungen der Formel

$$R\text{-}(O\text{-}CH_2\text{-}CH_2)_n\text{-}O\text{-}CH_2\text{-}COOM,$$

in der R einen linearen oder verzweigten aliphatischen Rest mit 6 bis 20 Kohlenstoffatomen, einen alkyl-oder oligoalkylaromatischen Rest mit 5 bis 16 Kohlenstoffatomen pro Alkylgruppe, n 1 bis 40 und M ein Alkali-oder Erdalkali-Metallion oder Ammonium bedeuten.

Vorteilhaft stellt man die carboxymethylierten Oxethylate nach DE-PS 24 18 444 durch Umsetzung von Oxethylaten der Formel

$$R\text{-}(O\text{-}CH_2\text{-}CH_2)_n\text{-}OH$$

mit Chloressigsäure oder einem Salz der Chloressigsäure in Gegenwart von Alkalihydroxid oder Erdalkalihydroxid her. Aber auch andere Herstellungsverfahren sind geeignet. R bedeutet vorzugsweise einen gesättigten oder ungesättigten, geradkettigen oder verzweigten Alkylrest mit 8 bis 18 C-Atomen oder einen Alkylarylrest mit 4 bis 16 C-Atomen in der Alkylgruppe oder einen Dialkylarylrest mit zusammen 5 bis 20 Kohlenstoffatomen in den Alkylgruppen oder einen Trialkylarylrest mit zusammen 7 bis 24 Kohlenstoffatomen in den Alkylgruppen. Als Alkohole, deren Oxethylate carboxymethyliert werden, lassen sich z. B. einsetzen: Hexylalkohol, Octylalkohol, 2-Ethylhexylalkohol, Nonylalkohol, Isononylalkohol, Decyl-und Undecyllalkohol, Lauryl-, Tridecyl-, Myristil-, Palmityl-und Stearylalkohol, aber auch ungesättigte, wie z. B. Oleylalkohol. Zweckmäßig können auch handelsübliche Gemische dieser Alkohole sein. Als Alkylphenole lassen sich z. B. einsetzen: Pentylphenol, Hexylphenol, Octylphenol, Nonylphenol, Dodecylphenol, Hexadecylphenol sowie die entsprechenden Di-bzw. Trialkylphenole. Geeignet sind auch Alkylkresole und -Xylenole oder Tributyl- und Tripentylphenole.

Diese Alkohole oder Phenole werden nach bekannten Verfahren oxethyliert, wobei der Oxethylierungsgrad Werte von 1 und 40, vorzugsweise 3 und 20, annehmen kann. Das Kation im carboxymethylierten Oxethylat mit der Formel

$$R-(O-CH_2-CH_2)_n-O-CH_2-COOM$$

kann Natrium, Kalium, Lithium, Ammonium, Calcium, Magnesium oder Wasserstoff sein.

Die carboxymethylierten Oxethylate sind anionische Tenside. Entsprechend ihrer Herstellung können sie jedoch nicht umgesetztes Oxethylat, also nichtionisches Tensid, enthalten. Demgemäß läßt sich ein Carboxymethylierungsgrad definieren. Die Formel

$$R-(O-CH_2-CH_2)_n-O-CH_2COOM$$

bezeichnet daher ein Gemisch mit unterschiedlichen Mengen an nicht umgesetztem Oxethylat, sofern der Carboxymethylierungsgrad niedriger als 100 % ist. Besonders wirksam sind Gemische bzw. Verbindungen mit einem Carboxymethylierungsgrad von 50 bis 100 %, vorzugsweise von 85 bis 100 %. Derartige Gemische bzw. Verbindungen werden als carboxymethylierte Oxethylate gemäß der Erfindung betrachtet.

Die beschriebenen Verbindungen sind in extrem weiten Grenzen mit Salzwasser verträglich, wobei höhere Erdalkalimetallionenkonzentrationen sich nicht nachteilig auswirken. Die hinsichtlich ihrer chemischen Struktur auf das jeweilige Schweröl-Wasser-System eingestellten carboxymethylierten Oxethylate sind vielfach bereits in Konzentrationen zwischen 300 und 500 ppm, teilweise auch darunter, als Emulgatoren hochwirksam.

Die Ethersulfate genügen der allgemeinen Formel

$$R'O(CH_2CH_2-O)_m-SO_4M',$$

wobei R' einen gesättigten oder ungesättigten, geradkettigen oder verzweigten Alkylrest mit 8 bis 20 C-Atomen oder einen Alkylarylrest mit 4 bis 16 C-Atomen in der Alkylgruppe oder einen Dialkylarylrest mit zusammen 5 bis 20 C-Atomen in den Alkylgruppen oder einen Trialkylrest mit zusammen 7 bis 24 C-Atomen in den Alkylgruppen bedeuten, m einen Wert von 1 bis 40, vorzugsweise 1 bis 10, annehmen kann und M' gewöhnlich für Natrium oder auch ein anderes Alkali-bzw. Erdalkalimetallion oder Ammonium steht.

Die jeweils an einer homologen Reihe - (Variation des Ethylenoxidgrades) optimierte Emulgierwirksamkeit ist bei den Ethersulfaten, die nach üblichen Verfahren hergestellt wurden, in Abhängigkeit vom Schweröl-Wasser-System z. T. - schwächer und z. T. auch stärker ausgeprägt als die der analog optimierten carboxymethylierten Oxethylate. Die Aussage zur Emulgierwirksamkeit richtet sich nach der auf die Ölmenge bezogenen Mindestkonzentration des Emulgators, die zu einer mindestens 24 Stunden etwa stabilen Emulsion führt. Beide Tensidklassen zeigen gewöhnlich eine mehr oder minder ausgeprägte Abhängigkeit ihrer Emulgierwirksamkeit von der Salinität des Öl-Wasser-Systems. Zu günstigeren Werten führen häufig höhere Salinitäten, wohingegen die Mindestemulgatorkonzentrationen in Gegenwart niedriger Salzgehalte relativ hoch liegen können. Andererseits werden bei der heutigen Schwerölgewinnung häufig Verfahren unter Verwendung von Wasserdampf eingesetzt, wobei das gewöhnlich salzhaltige Formationswasser durch die kondensierenden Brüden verdünnt wird, so daß mit einer gewissen Schwankung der Salinität gerechnet werden muß. Die erfindungsgemäß einzusetzenden Tensidmischungen erweisen sich daher als bestens geeignet, da ihre Wirksamkeit von der Salinität weitgehend unabhängig ist.

Das Mischungsverhältnis der beiden Tensidtypen kann in weiten Grenzen schwanken und 10 : 1 bis 1 : 10, vorzugsweise 3 : 1 bis 1 : 3, insbesondere 2 : 1 bis 1 : 2, betragen.

In Vorversuchen kann die einzusetzende Tensidmischung für das gegebene Schweröl-Wasser-Systems optimal eingestellt werden. Dies kann z. B. dadurch geschehen, daß man die beiden Einzeltenside jeweils im Rahmen einer homologen Reihe für die höchste in Frage kommende Salinität hinsichtlich ihrer chemischen Struktur optimiert, wie in den angefügten Beispielen beschrieben.

Hierzu werden z. B. die Tenside in dem betreffenden Wasser gelöst und mit dem betreffenden Schweröl vermischt und nach kurzzeitigem Rühren mit einem Flügelrührer ohne Anwendung hoher Scherkräfte auf ihre Emulgierwirkung geprüft, indem die Stabilität der Emulsion festgestellt wird. Diese Beurteilung der Emulsion wird ca. 24 Stunden später wie derholt, und sodann wird gegebenenfalls die Viskosität in Abhängigkeit der Schergeschwindigkeit gemessen. Da Schwerölemulsionen meist ein wenig strukturviskos sind, wird für die Schergeschwindigkeit ein Bereich zwischen 10 und 100 sec$^{-1}$ gewählt, wie er etwa dem Transport durch Rohrleitungen entspricht. Ein Tensid ist dann ein optimaler Emulgator, wenn die zur Emulgierung notwendige Menge möglichst gering ist.

Die Emulgatormenge liegt im allgemeinen bei 0,01 bis 0,5, insbesondere bei 0,03 bis 0,2 Gewichtsprozent, bezogen auf die Ölmenge. Das entspricht 100 bis 5 000, vorzugsweise 300 bis 2 000 ppm. Der Emulgator wird z. B. als Schmelze oder als wäßrige Lösung bzw. als Dispersion der Öl-Wasser-Mischung zudosiert, oder auch dem Wasser zugegeben, das dann mit dem Öl vermischt wird. Unter Wasser wird hier entweder ein mehr oder minder salzhaltiges Wasser verstanden, das gemeinsam mit dem Schweröl produziert wird. Es kann auch ein wohlfeil zur Verfügung stehendes Oberflächenwasser oder schließlich auch ein Gemisch aus beiden Wässern sein.

Statt den Emulgator in das Wasser zu dosieren, kann er auch dem Schweröl selbst zugefügt werden, zumal die hier beanspruchten Tensidmischungen eine gute Öllöslichkeit zeigen. Unter Umständen kann es vorteilhaft sein, eine kleine Menge leichtflüssiges Kohlenwasserstoffgemisch als Lösevermittler zu verwenden. Die Vermischung der drei Komponenten zur Bildung der Emulsion, nämlich Öl, Wasser und Emulgator, kann entweder unmittelbar am Bohrloch oder in bzw. nahe einem Sammeltank oder an irgendeinem anderen Punkt des Rohrleitungssytems erfolgen.

Eine Variante des Verfahrens besteht darin, daß eine Emulgatorlösung oder -dispersion in den unteren Teil der Produktionsbohrung injiziert wird, um den Fluß des Schweröls in der Produktionsleitung zu erleichtern. Diese Verfahrensvariante empfiehlt sich besonders bei einem niedrigen Gas-Öl-Verhältnis.

Das Mischungsverhältnis Öl zu Wasser kann in weiten Grenzen schwanken und 10 : 90 bis 90 : 10 betragen. Aus wirtschaftlichen Gründen sind hohe Ölgehalte anzustreben, wobei zu berücksichten ist, daß sehr hohe Ölgehalte auch zu relativ hochviskosen Öl/Wasser-Emulsionen führen bzw. eine dringend zu vermeidende Phaseninversion begünstigen können. Das wirtschaftliche Optimum liegt daher je nach System bei einem Ölgehalt zwischen 70 und 85 %. Die Emulgierung wird bekanntlich begünstigt durch Mischvorrichtungen wie Rührwerke, Kreiselpumpen, Statikmixer usw., die im Bedarfsfall verwendet werden. Die gebildete Emulsion wird durch das Rohrleitungssystm gefördert, das gegebenenfall Zwischenstationen und zwischengeschaltete Lagerbehälter enthalten kann. Am Rohrleitungsendpunkt wird die Emulsion in einem Separator gespalten, wobei es von Vorteil sein kann, einen oder mehrere Dismulgatoren zuzusetzen. Das so entwässerte Rohöl wird abgezogen und sodann entweder der Raffinerie oder einem eventuellen Weitertransport, z. B. per Schiff, zugeführt. Erfindungsgemäß zu emulgierende und zu transportierende Schweröle sind z. B. solche mit einem API von weniger als 18 °.

## Beispiele

In einem Glasgefäß oder Polyethylenbecher von ca. 200 ml Inhalt werden 75 g Schweröl und 25 g der genannten wäßrigen Tensidlösung, die außerdem noch Neutralelektrolyt enthält, bei Raumtemperatur mit einem einfachen Flügelrührer (ca. 100 Umdrehungen pro Minute) miteinander verrührt. Ist das hinzugefügte Tensid wirksam und seine Menge ausreichend, so ist eine einheitlich aussehende Emulsion entstanden. Sodann läßt man die Mischung ca. 24 Stunden bei Raumtemperatur stehen und untersucht erneut die Einheitlichkeit der Mischung, wobei -falls notwendig -etwas mit einem Glasstab gerührt wird. Hat sich eine leichtflüssige, einheitliche Emulsion gebildet, so wird die Viskosität -wie bereits geschildert -gemessen. Registriert wird die Mindestemulgatorkonzentration (Gewichtsprozent, bezogen auf die Ölmenge) des betreffenden Tensids, die zur Herstellung einer etwa stabilen Emulsion notwendig ist. "Etwa stabil" bedeutet hierbei, daß bereits geringfügiges Rühren mit dem Glasstab dazu ausreicht, die ursprüngliche Einheitlichkeit (Homogenität), falls diese überhaupt eingebüßt wurde, wieder herzustellen.

Als Schweröle wurden 2 venezolanische Rohöle eingesetzt: Boscan-Öl (ca. 10° API, Viskosität bei 20 °C 180 000 mPa s, Stockpunkt 7 °C) und CN-Öl (Ca. 8° API, Viskosität bei 20 °C ca. 3 000 000 mPa s, Stockpunkt 18 °C).

Anhand der in den folgenden Tabellen zusammengefaßten Beispiele wird die hohe Wirksamkeit der carboxymethylierten Oxethylate und die der Ethersulfate als Emulgatoren für Schwer(st)-Öl-in-Wasser-Emulsionen gezeigt. Es wird weiterhin demonstriert, daß Gemische aus beiden Tensidklassen, besonders im Falle niedrigsalinarer Wasser, eine stark synergistische Wirkung haben. Die Mindestemulgatorkonzentration bei den Tensidmischungen ist bei beiden Rohölsystemen nahezu unabhängig von der Salinität des Wassers.

## Tabelle A

Mindestemulgatorkonzentration $C_{min}$ (%) bei 1 : 1-Gemischen aus carboxymethyliertem Oxethylat und Ethersulfat im Vergleich zu den Einzelsubstanzen in Abhängigkeit der Salinität. Öl Boscan, o/w = 3, carboxymethyliertes Nonylphenoloxethylat-Natrium-Salz mit 6 Mol Ethylenoxid/Mol (A) und Nonylphenolethersulfat-Na mit 4 Mol EO/Mol (B), Viskosität bei 20 °C

| Beispiel Nr. | Salinität (% NaCl) | A $C_{min}$ (%) | A (Eta(mPa s)) | B $C_{min}$ (%) | B (Eta(mPa s)) | 1 : 1-Gemisch $C_{min}$ (%) | 1 : 1-Gemisch (Eta(mPa s)) |
|---|---|---|---|---|---|---|---|
| 1 | 0,5 | 0,5 | (110) | 0,15 | (200) | 0,02 | (130) |
| 2 | 1 | 0,4 | ( 90) | 0,1 | (250) | 0,03 | (160) |
| 3 | 2 | 0,05 | ( 80) | 0,15 | (300) | 0,05 | (150) |
| 4 | 3,5 | 0,03 | (120) | 0,15 | | 0,05 | (100) |
| 5 | 5 | 0,03 | (150) | 0,1 | (140) | 0,05 | (110) |

0 237 724

0 237 724

## Tabelle B

Mindestemulgatorkonzentration $C_{min}$ (%) bei 1 : 1-Gemischen aus carboxymethyliertem Oxethylat und Ethersulfat im Vergleich zu den Einzelsubstanzen in Abhängigkeit der Salinität. Öl CN, o/w = 3, carboxymethyliertes Nonylphenoloxethylat-Natrium-Salz mit 10 Mol Ethylenoxid/Mol (C) und Nonylphenolethersulfat-Na mit 5 Mol EO/Mol (D), Viskosität bei 40 °C

| Beispiel Nr. | Salinität (% NaCl) | C | | D | | 1 : 1-Gemisch | |
|---|---|---|---|---|---|---|---|
| | | $C_{min}$ (%) | (Eta(mPa s)) | $C_{min}$ (%) | (Eta(mPa s)) | $C_{min}$ (%) | (Eta(mPa s)) |
| 6 | 0,5 | 0,4 | ( 80) | 0,5 | | 0,075 | (60) |
| 7 | 1 | 0,3 | ( 50) | 0,3 | (120) | 0,075 | (60) |
| 8 | 2 | 0,2 | (110) | 0,1 | (140) | 0,05 | (70) |
| 9 | 3,5 | 0,1 | ( 90) | 0,1 | | 0,05 | (60) |
| 10 | 5 | 0,05 | ( 70) | 0,075 | (140) | 0,05 | (70) |

Tabelle C

Mindestemulgatorkonzentration $C_{min}$ (%) bei 1 : 1-Gemischen aus carboxymethyliertem Oxethylat und Ethersulfat im Vergleich zu den Einzelsubstanzen in Abhängigkeit der Salinität. Öl CN, o/w = 3, carboxymethyliertes Dodecylphenoloxethylat-Natrium-Salz mit 8 Mol Ethylenoxid/Mol (E) und Nonylphenolethersulfat-Na mit 5 Mol EO/Mol (D), Viskosität bei 40 °C

| Beispiel Nr. | Salinität (% NaCl) | E $C_{min}$ (%) | (Eta(mPa s)) | D $C_{min}$ (%) | (Eta(mPa s)) | 1 : 1-Gemisch $C_{min}$ (%) | (Eta(mPa s)) |
|---|---|---|---|---|---|---|---|
| 11 | 0,5 | > 0,4 | | 0,4 | | 0,05 | ( 80) |
| 12 | 1 | 0,4 | | 0,3 | (120) | 0,05 | (120) |
| 13 | 2 | 0,25 | (200) | 0,1 | (140) | 0,05 | (150) |
| 14 | 3,5 | 0,1 | (150) | 0,1 | (110) | 0,05 | |
| 15 | 5 | 0,075 | (140) | 0,1 | (200) | 0,05 | (100) |

0 237 724

**Ansprüche**

1. Verfahren zum Transport von zähflüssigen Ölen durch eine Rohrleitung in Form einer Öl-in-Wasser-Emulsion aus Rohöl, mindestens 10 bis 15 % Wasser und einem Emulgator, die anschließend wieder in Rohöl und Wasser getrennt wird, dadurch gekennzeichnet, daß als Emulgator eine Mischung aus carboxymethyliertem Oxethylat der Formel

$$R\text{-}(O\text{-}CH_2\text{-}CH_2)_n\text{-}OCH_2COOM,$$

in der R einen linearen oder verzweigten aliphatischen Rest mit 8 bis 20 Kohlenstoffatomen, einen alkylaromatischen Rest mit 4 bis 16 Kohlenstoffatomen in der Alkylgruppe, einen dialkylaromatischen Rest mit zusammen 5 bis 20 Kohlenstoffatomen in den Alkylgruppen oder einen trialkylaromatischen Rest mit zusammen 7 bis 24 Kohlenstoffatomen in den Alkylgruppen, n 1 bis 40 und M ein Alkali-oder Erdalkali-Metallion oder Ammonium bedeuten, und aus Ethersulfat der Formel

$$R'\text{-}(O\text{-}CH_2\text{-}CH_2)_m\text{-}OSO_3M'$$

in der R' einen linearen oder verzweigten aliphatischen Rest mit 8 bis 20 Kohlenstoffatomen, einen alkylaromatischen Rest mit 4 bis 16 Kohlenstoffatomen in der Alkylgruppe, einen dialkylaromatischen Rest mit zusammen 5 bis 20 Kohlenstoffatomen in den Alkylgruppen oder einen trialkylaromatischen Rest mit zusammen 7 bis 24 Kohlenstoffatomen in den Alkylgruppen, m 1 bis 40 und M' ein Alkali-oder Erdalkali-Metallion oder Ammonium bedeuten, eingesetzt wird.

2. Verfahren nach Anspruch 1, dadurch gekennzeichnet, daß das Mengenmischungsverhältnis von carboxymethyliertem Oxethylat zu Ethersulfat 1 : 10 bis 10 : 1 beträgt.

3. Verfahren nach den Ansprüchen 1 und 2, dadurch gekennzeichnet, daß der Carboxymethylierungsgrad des carboxymethylierten Oxethylats 50 bis 100 % beträgt.

4. Verfahren nach den Ansprüchen 1 bis 3, dadurch gekennzeichnet, daß die Emulgatorkonzentration, bezogen auf die Ölmenge, 0,01 bis 0,5 Gewichtsprozent beträgt.

5. Verfahren nach den Ansprüchen 1 bis 4, dadurch gekennzeichnet, daß der Rohölanteil der Emulsion 50 bis 85 % beträgt.